# EUROPEAN PATENT SPECIFICATION

(11) **EP 2 471 893 B1**
(45) Date of publication and mention of the grant of the patent: **27.08.2014**
(21) Application number: 11174615.2
(22) Date of filing: 20.07.2011
(51) Int. Cl.: C09K 19/56

(54) **Liquid crystal alignment agent, liquid crystal alignment film manufactured using the same, and liquid crystal display device including the liquid crystal alignment film**
Flüssigkristallausrichtungsmittel, daraus herstellte Flüssigkristallausrichtungsfolie und Flüssigkristallanzeigevorrichtung mit der Flüssigkristallausrichtungsfolie
Agent d'alignement à base de cristaux liquides, film d'alignement à base de cristaux liquides fabriqués à l'aide de celui-ci, et dispositif d'affichage à base de cristaux liquides incluant le film d'alignement à base de cristaux liquides

(30) Priority: 29.12.2010 KR 20100137874; 29.06.2011 KR 20110063963
(43) Date of publication of application: 04.07.2012
(73) Proprietor: CHEIL INDUSTRIES INC., Kumi-city, Kyungsangbuk-do 730-030 (KR)
(72) Inventor: Yang, Jae-Deuk, Gyeonggi-do (KR); Kim, Eun-Ha, Gyeonggi-do (KR); Shin, Myoung-Youp, Gyeonggi-do (KR); Yoo, Yong-Sik, Gyeonggi-do (KR); Jo, Guk-Pyo, Gyeonggi-do (KR); Choi, Jung-Gon, Gyeonggi-do (KR)
(74) Representative: Michalski Hüttermann & Partner Patentanwälte mbB

(56) References cited:
- US-A1- 2006 142 538
- US-A1- 2009 146 105

## Description

### BACKGROUND OF THE INVENTION

### (a) Field of the Invention

This disclosure relates to a liquid crystal alignment agent, a liquid crystal alignment film manufactured using the same, and a liquid crystal display including the liquid crystal alignment film.

### (b) Description of the Related Art

A liquid crystal display (LCD) includes a liquid crystal alignment film, and the liquid crystal alignment film is mainly made of polymer materials. The liquid crystal alignment film plays a role of a director in aligning liquid crystal molecules. When the liquid crystal molecules are moved by the influence of an electric field to display an image, the liquid crystal alignment film allows them to be oriented in a predetermined direction. Generally, it is necessary to uniformly align the liquid crystal molecules in order to provide uniform brightness and a high contrast ratio to the LCD.

US 2006/142538 A1 describes a liquid crystal orientating agent excellent in liquid crystal orientating feature, orientation control and rubbing resistance, high in voltage holding feature, and used to obtain a liquid crystal orientation film reduced in charge accumulation, and a liquid crystal display element hard to cause a defective display, a lowered contrast and a display image persistence. The liquid crystal orientating agent is characterized by including a low-resistance polyimide precursor having a volume resistivity in a film form of 1 x 10<10> to 1 x 10<14> ohmcm, and a highly-oriented polyimide precursor or polyimide having a specific structure; and the liquid crystal display element uses this liquid crystal orientating agent.

US 2009/146105 A1 describes a liquid crystal photo-alignment agent that includes a polyamic acid copolymer including a repeating unit having the following Formula 1 and a repeating unit having the following Formula 2; a polyimide copolymer including a repeating unit having the following Formula 3 and a repeating unit having the following Formula 4; or a combination thereof: wherein the definition of R1 to R8 are the same as in the specification. The liquid crystal photo-alignment agent can have improved liquid crystal alignment properties, electrical characteristics such as voltage holding ratio, pretilt angle, residual DC, and the like, printability, cleaning stability, and spot stability, and is capable of unidirectionally aligning liquid crystals by ultraviolet (UV) exposure.

However, as the LCD market has recently increased, a high quality LCD is increasingly required. In addition, since LCDs are rapidly becoming larger, there is an increasing requirement for a highly productive liquid crystal alignment film. Accordingly, a liquid crystal alignment film having a low inferiority rate in the LCD manufacturing process, excellent electro-optical characteristics, high reliability, and high performance that widely satisfies different characteristics for variously-developing LCDs is constantly required.

### SUMMARY OF THE INVENTION

One embodiment of the present invention provides a liquid crystal alignment agent that increases the stability of alignment layer by increasing the light resposing rate and minimizes the influence due to the residue double bond.

Another embodiment of the present invention provides a liquid crystal alignment film manufactured using the liquid crystal alignment agent.

Yet another embodiment of the present invention provides a liquid crystal display including the liquid crystal alignment film.

According to one embodiment of the present invention, a liquid crystal alignment agent is provided that includes a polymer selected from polyamic acid including a repeating unit represented by the following Chemical Formula 1, polyimide including a repeating unit represented by the following Chemical Formula 2, and a combination thereof.

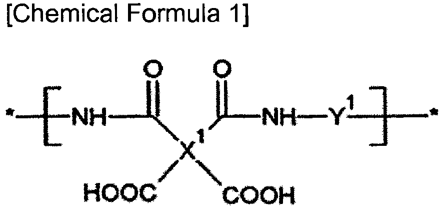

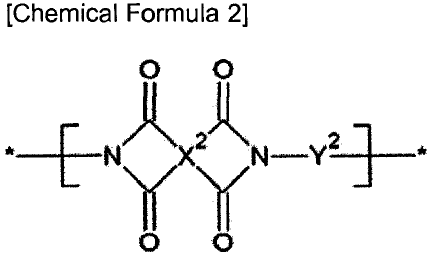

In Chemical Formulae 1 and 2,
X¹ and X² are the same or different, and are each independently a tetravalent organic group derived from alicyclic acid dianhydride or aromatic acid dianhydride, and
Y¹ and Y² are the same or different, and are each independently a divalent organic group derived from diamine, and the diamine includes one represented by the following Chemical Formula 3.

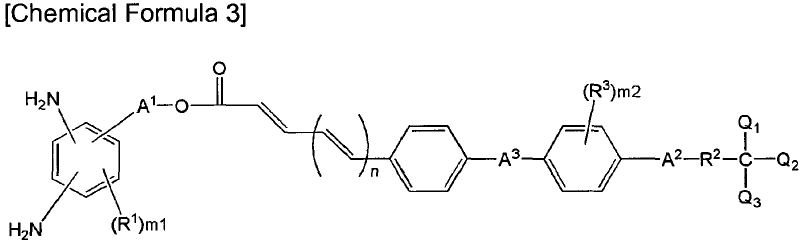

In Chemical Formula 3,
A¹ is a substituted or unsubstituted C1 to C20 alkylene group,
A² is a single bond, O, SO₂, or C(R₁₀₃)(R₁₀₄), wherein R₁₀₃ and R₁₀₄ are the same or different, and are independently hydrogen, or a substituted or unsubstituted C1 to C6 alkylene,
A³ is -O-, -OCO-, -COO-, -CONH-, or -NHCO-,
each R¹ is a substituted or unsubstituted C1 to C30 alkyl group; a substituted or unsubstituted C6 to C30 aryl group; or a substituted or unsubstituted C2 to C30 heteroaryl group,
R² is a substituted or unsubstituted C1 to C30 alkylene group, a C1 to C30 alkylene group where at least one of -CH₂- group is independently substituted with -CO-, -CO-O-, -NZ-, -NZ-CO-, -CO-NZ- or -CH=CH-, wherein Z is hydrogen or a C1 to C10 alkyl group, provided that oxygen atom is not directly bound to each other,
each R³ is the same or different and is independently substituted or unsubstituted C1 to C30 alkyl; substituted or unsubstituted C6 to C30 aryl; a substituted or unsubstituted C2 to C30 heteroaryl,
Q₁, Q₂ and Q₃ are independently hydrogen or a halogen,
n is an integer ranging from 0 to 3
m1 is an integer ranging from 0 to 3, and
m2 is an integer ranging from 0 to 4.

The diamine may include at least one selected from diamine represented by the following Chemical Formula 4 and diamine represented by the following Chemical Formula 5.

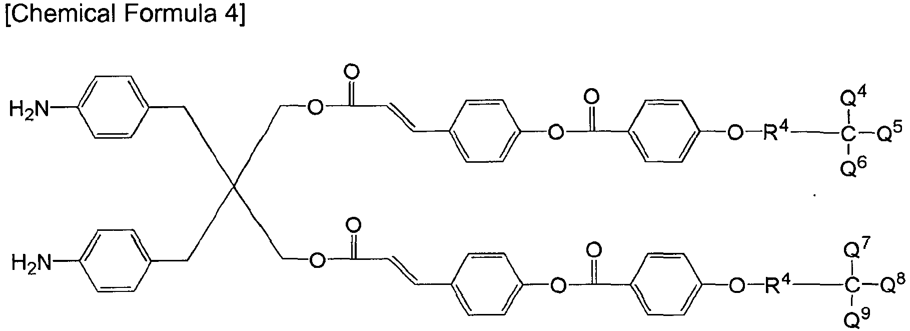

In Chemical Formula 4,
R⁴ is a substituted or unsubstituted C1 to C30 alkylene group, a C1 to C30 alkylene group where at least one of -CH₂- group is independently substituted with -CO-, -CO-O-, -NZ-, -NZ-CO-, -CO-NZ- or -CH=CH-, wherein Z is hydrogen or a C1 to C10 alkyl group, provided that oxygen atom is not directly bound to each other, and
Q⁴, Q⁵, Q⁶, Q⁷, Q⁸ and Q⁹ are independently hydrogen or a halogen,

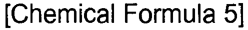

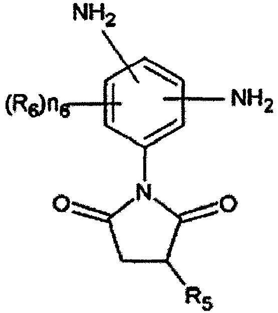

In Chemical Formula 5,
R₅ is hydrogen; a substituted or unsubstituted C1 to C30 alkyl group; a substituted or unsubstituted C6 to C30 aryl group; or a substituted or unsubstituted C2 to C30 heteroaryl group,
R₆ is a substituted or unsubstituted C1 to C30 alkyl group; a substituted or unsubstituted C6 to C30 aryl group; or a substituted or unsubstituted C2 to C30 heteroaryl group, and
n6 is an integer ranging from 0 to 3.

The diamine may include 30mol% to 90mol% of the diamine represented by the above Chemical Formula 3, 5mol% to 20mol% of the diamine represented by the above Chemical Formula 4, and 5mol% to 50mol% of the diamine represented by the above Chemical Formula 5 based on the total amount of diamine.

The diamine represented by the above Chemical Formula 3 may include for example, the diamine represented by the following Chemical Formula 6.

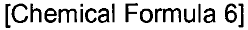

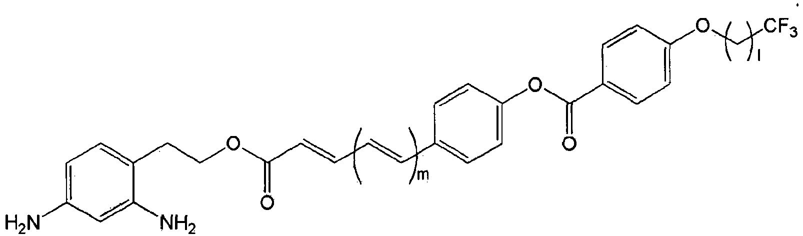

In Chemical Formula 6,
l is an integer ranging from 0 to 10, and
m is an integer ranging from 0 to 3.

The polyamic acid and the polyimide may have a weight average molecular weight of 10,000 to 300,000.

The liquid crystal alignment agent may include the polyamic acid and the polyimide at a weight ratio of 1:99 to 50:50.

The liquid crystal alignment agent may include 1 wt% to 30 wt% of a solid.

The liquid crystal alignment agent may have a viscosity of 3 cps to 30 cps.

According to another embodiment of the present invention, a liquid crystal alignment film manufactured by applying the liquid crystal alignment agent to a substrate is provided.

According to yet another embodiment of the present invention, a liquid crystal display including the liquid crystal alignment film is provided.

The liquid crystal alignment agent increases the stability of alignment layer and minimizes the influence due to the remaining double bond.

### DETAILED DESCRIPTION OF THE EMBODIMENTS

Exemplary embodiments of the present invention will hereinafter be described in detail. However, these embodiments are only exemplary, and the present invention is not limited thereto.

As used herein, when specific definition is not provided, the term "substituted" may refer to one substituted with a substituent selected from the group consisting of halogen F, Br, Cl or I,, a hydroxy group, a nitro group, a cyano group, an amino group (NH₂, NH(R¹⁰⁰) or N(R¹⁰¹)(R¹⁰²), wherein R¹⁰⁰, R¹⁰¹, and R¹⁰² are the same or different, and are each independently A C1 to C10 alkyl group, an amidino group, a hydrazine group, a hydrazone group, a carboxyl group, a substituted or unsubstituted alkyl group, a substituted or unsubstituted haloalkyl group, a substituted or unsubstituted alkoxy group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocycloalkyl group, instead of at least one of hydrogen of a functional group.

As used herein, when specific definition is not provided, the term "alkyl group" may refer to a C1 to C30 alkyl group, and specifically a C1 to C20 alkyl group, the term "cycloalkyl group" may refer to a C3 to C30 cycloalkyl group, and specifically a C3 to C20 cycloalkyl group, the term "heterocycloalkyl group" may refer to a C2 to C30 heterocycloalkyl group, and specifically a C2 to C20 heterocycloalkyl group, the term "alkylene group" may refer to a C1 to C30 alkylene group, and specifically a C1 to C20 alkylene group, the term "alkoxy group" may refer to a C1 to C30 alkoxy group, and specifically a C1 to C20 alkoxy group, the term "cycloalkylene group" may refer to a C3 to C30 cycloalkylene group, and specifically a C3 to C20 cycloalkylene group, the term "heterocycloalkylene group" may refer to a C2 to C30 heterocycloalkylene group, and specifically a C2 to C20 heterocycloalkylene group, the term "an aryl group" may refer to a C6 to C30 an aryl group, and specifically a C6 to C20 an aryl group, the term "heteroaryl group" may refer to a C2 to C30 heteroaryl group, and specifically a C2 to C18 heteroaryl group, the term "arylene" group may refer to a C6 to C30 arylene group, and specifically a C6 to C20 arylene group, the term "heteroarylene group" may refer to a C2 to C30 heteroarylene group, and specifically a C2 to C20 heteroarylene group, the term "alkylaryl group" may refer to a C7 to C30 alkylaryl group, and specifically a C7 to C20 alkylaryl group, and the term "halogen" may refer to F, Cl, Br, or I.

As used herein, when specific definition is not provided, the heterocycloalkyl group, heterocycloalkylene group, heteroaryl group, and heteroarylene group may independently refer to a cycloalkyl group, a cycloalkylene group, an aryl group, and an arylene group including 1 to 3 heteroatoms of N, O, S, Si, or P and remaining carbon in one ring.

As used herein, when specific definition is not provided, the term "aliphatic" may refer to a C1 to C30 alkyl, a C2 to C30 alkenyl, a C2 to C30 alkynyl, a C1 to C30 alkylene, a C2 to C30 alkenylene, or a C2 to C30 alkynylene, and sepcifically a C1 to C20 alkyl, a C2 to C20 alkenyl, a C2 to C20 alkynyl, a C1 to C20 alkylene, a C2 to C20 alkenylene, or a C2 to C20 alkynylene, the term "alicyclic" may refer to a C3 to C30 cycloalkyl, a C3 to C30 cycloalkenyl, a C3 to C30 cycloalkynyl, a C3 to C30 cycloalkylene, a C3 to C30 cycloalkenylene, or C3 to C30 cycloalkynylene, and specifically a C3 to C20 cycloan alkyl, a C3 to C20 cycloalkenyl, a C3 to C20 cycloalkynyl, a C3 to C20 cycloalkylene, a C3 to C20 cycloalkenylene, or a C3 to C20 cycloalkynylene, and the term "aromatic" may refer to a C6 to C30 aryl, a C2 to C30 heteroaryl, a C6 to C30 arylene, or a C2 to C30 heteroarylene, and specifically a C6 to C16 aryl, a C2 to C16 heteroaryl, a C6 to C16 arylene, or a C2 to C16 heteroarylene.

As used herein, when specific definition is not provided, the term "combination" may refer to mixture or copolymerization; in case of an alicyclic organic group and an aromatic organic group, a fused ring of two or more rings, or two or more rings linked by a single bond, O, S, C(=O), CH(OH), S(=O), S(=O)₂, Si(CH₃)₂, (CH₂)ₚ (wherein, 1≤p≤2), (CF₂)_{q} (wherein, 1≤q≤2), C(CH₃)₂, C(CF₃)₂, C(CH₃)(CF₃), or C(=O)NH. Herein, "copolymerization" may refer to block copolymerization to random copolymerization, and "copolymer" may refer to a block copolymer to a random copolymer.

"*" denotes a position linked to the same or different atom or Chemical Formula.

The liquid crystal alignment agent according to one embodiment of the present invention includes a polymer selected from polyamic acid including a repeating unit represented by the following Chemical Formula 1, polyimide including a repeating unit represented by the following Chemical Formula 2, and a combination thereof.

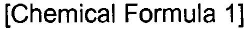

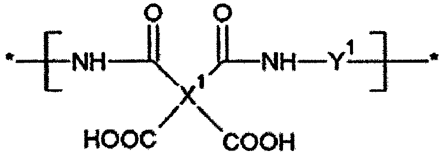

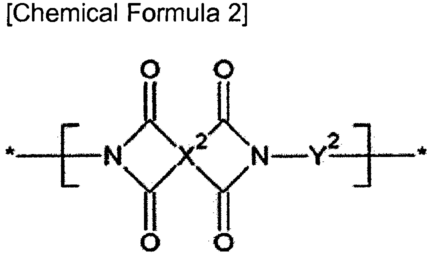

In Chemical Formulae 1 and 2,
X¹ and X² are the same or different, and are each independently a tetravalent organic group derived from alicyclic acid dianhydride or aromatic acid dianhydride. X¹ may be the same or different in each repeating unit, and X² may be the same or different in each repeating unit.
Y¹ and Y² are the same or different, and are each independently a divalent organic group derived from diamine, and the diamine includes one represented by the following Chemical Formula 3. Y¹ may be the same or different in each repeating unit, and Y² may be the same or different in each repeating unit.

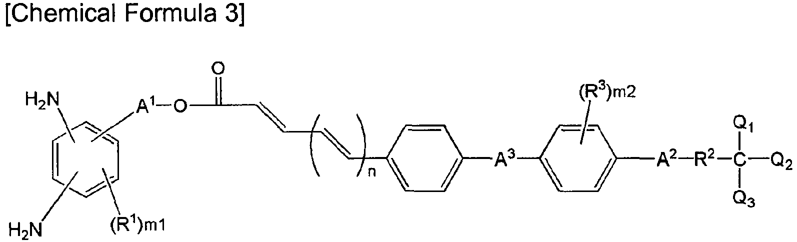

In Chemical Formula 3,
A¹ is a substituted or unsubstituted C1 to C20 alkylene group,
A² is a single bond, O, SO₂, or C(R₁₀₃)(R₁₀₄), wherein R₁₀₃ and R₁₀₄ are the same or different, and are independently hydrogen, or a substituted or unsubstituted C1 to C6 alkylene,
A³ is -O-, -OCO-, -COO-, -CONH-, or -NHCO-,
each R¹ is a substituted or unsubstituted C1 to C30 alkyl group; a substituted or unsubstituted C6 to C30 aryl group; or a substituted or unsubstituted C2 to C30 heteroaryl group,
R² is a substituted or unsubstituted C1 to C30 alkylene group, a C1 to C30 alkylene group where at least one of -CH₂- group is independently substituted with -CO-, -CO-O-, -NZ-, -NZ-CO-, -CO-NZ- or -CH=CH-, wherein Z is hydrogen or a C1 to C10 alkyl group, provided that oxygen atom is not directly bound to each other,
each R³ is the same or different and is independently substituted or unsubstituted C1 to C30 alkyl; substituted or unsubstituted C6 to C30 aryl; a substituted or unsubstituted C2 to C30 heteroaryl,
Q₁, Q₂ and Q₃ are independently hydrogen or a halogen,
n is an integer ranging from 0 to 3
m1 is an integer ranging from 0 to 3, and
m2 is an integer ranging from 0 to 4.

The diamine represented by Chemical Formula 3 may decrease the monomer amount by using a mono-type cinnamate structure. It may also increase the light reactivity by inducing two or more double bonding amount into the mono cinnamate to increase the reaction sites and ensure the alignment stability and processibility.

The diamine represented by the above Chemical Formula 3 may include for example, the diamine represented by the following Chemical Formula 6, but is not limited thereto.

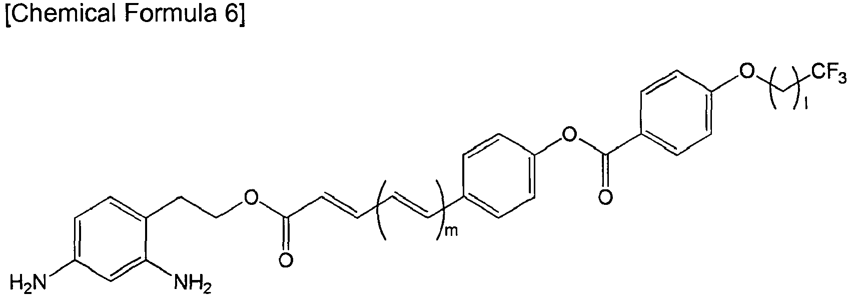

In Chemical Formula 6,
l is an integer ranging from 0 to 10, and
m is an integer ranging from 0 to 3.

The diamine may include the diamine represented by the above Chemical Formula 3 singularly, or a mixture of the diamine represented by the above Chemical Formula 3 and the diamine represented by the above Chemical Formula 4 and/or the diamine represented by the above Chemical Formula 5.

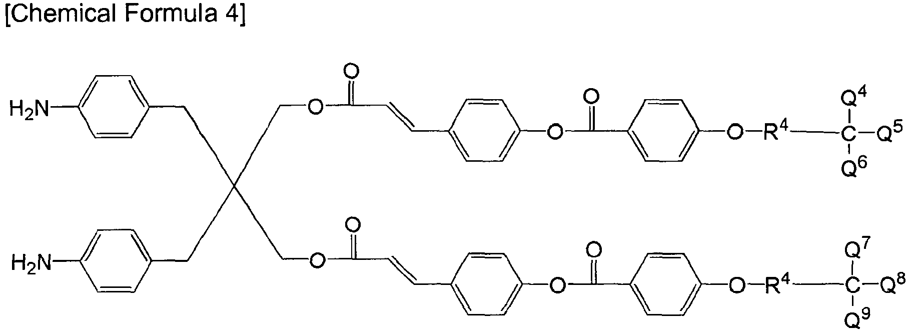

In Chemical Formula 4,
R⁴ is a substituted or unsubstituted C1 to C30 alkylene group, a C1 to C30 alkylene group where at least one of -CH₂- group is independently substituted with -CO-, -CO-O-, -NZ-, -NZ-CO-, -CO-NZ- or -CH=CH-, wherein Z is hydrogen or a C1-C10 alkyl group, provided that oxygen atom is not directly bound to each other, and
Q⁴, Q⁵, Q⁶, Q⁷, Q⁸ and Q⁹ are independently hydrogen or a halogen.

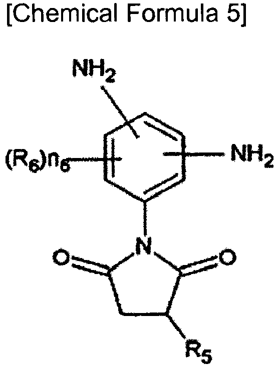

In Chemical Formula 5,
R₅ is hydrogen; a substituted or unsubstituted C1 to C30 alkyl group; a substituted or unsubstituted C6 to C30 aryl group; or a substituted or unsubstituted C2 to C30 heteroaryl group,
R₆ is a substituted or unsubstituted C1 to C30 alkyl group; a substituted or unsubstituted C6 to C30 aryl group; or a substituted or unsubstituted C2 to C30 heteroaryl group, and
n6 is an integer ranging from 0 to 3.

When the diamine include the diamine represented by the above Chemical Formula 4 and the diamine represented by the above Chemical Formula 5 as well as the diamine represented by the above Chemical Formula 3, the diamine may include 30mol% to 90mol% of the diamine represented by the above Chemical Formula 3, 5mol% to 20mol% of the diamine represented by the above Chemical Formula 4, and 5mol% to 50mol% of the diamine represented by the above Chemical Formula 5 based on the total amount of diamine. When each diamine is included within the range, it may improve the transmittance by controlling the pretilt angle, and it may effectively improve liquid crystal alignment properties, chemical resistance, electro-optical characteristics, thermal stability, and mechanical characteristics.

The polyamic acid and the polyimide may have a weight average molecular weight of 10,000 to 300,000. When the polyamic acid and polyimide have a weight average molecular weight within the range, it may effectively improve the reliability and the electro-optical characteristics and have the excellent chemical resistance and stably maintain the pretilt angle even after driving the liquid crystal display.

The liquid crystal alignment agent may include the polyamic acid and the polyimide at a weight ratio of 1:99 to 50:50. It may improve the alignment stability when the polyamic acid and the polyimide are included within the range. For example, the polyamic acid and the polyimide may be included in a weight ratio of 10:90 to 50:50.

The liquid crystal alignment agent may include 1 wt% to 25 wt% of the polymer. When the polymer is included within the range, it may improve the printability and liquid crystal alignment properties. For example, the polymer may be included in 3 wt% to 20 wt%.

The liquid crystal alignment agent according to one embodiment of the present invention includes a suitable solvent to dissolve the polymer.

The suitable solvent for dissolving the polymer may incldue N-methyl-2-pyrrolidone; N,N-dimethyl acetamide; N,N-dimethyl formamide; dimethyl sulfoxide; γ-butyrolactone; tetrahydrofuran(THF); and a phenol-based solvent such as meta cresol, phenol, halgenated phenol, and the like, but is not limited thereto.

The solvent may further include 2-butyl cellosolve(2-BC) and thereby it may improve the printability. The 2-butyl cellosolve may be included in 1 wt% to 60 wt% based on the total amount of solvent including 2-butyl cellosolve. When 2-butyl cellosolve is included within the range, it may easily improve the printability. For example, the 2-butyl cellosolve may be included in 10 wt% to 60 wt% based on the total amount of solvent including 2-butyl cellosolve.

In addition, the solvent may further include a poor solvent such as alcohols, ketones, esters, ethers, hydrocarbons, or halgenated hydrocarbons in an appropriate ratio as long as the soluble polyimide polymer is not precipitated. The poor solvents may decrease the surface energy of liquid crystal alignment agent to improve the spreadability and flatness during the coating process.

The poor solvent may be included in 1 wt% to 90 wt%, for example 1 wt% to 70 wt% based on the total amount of solvent including poor solvent.

The poor solvent may include methanol, ethanol, isopropanol, cyclohexanol, ethyleneglycol, propyleneglycol, 1,4-butanediol, triethyleneglycol, acetone, methylethylketone, cyclohexanone, methylacetate, ethylacetate, butylacetate, diethyloxalate, malonic acid ester, diethylether, ethyleneglycol monomethylether, ethyleneglycol dimethylether, ethyleneglycol monoethylether, ethyleneglycol phenylether, ethyleneglycol phenylmethylether, ethyleneglycol phenylethylether, diethyleneglycol dimethylether, diethyleneglycol ether, diethyleneglycol monomethylether, diethyleneglycol monoethylether, diethyleneglycol monomethylether acetate, diethyleneglycol monoethylether acetate, ethyleneglycol methylether acetate, ethyleneglycol ethylether acetate, 4-hydroxy-4-methyl-2-pentanone, 2-hydroxy ethyl propionate, 2-hydroxy-2-methyl ethyl propionate, ethoxy ethyl acetate, hydroxy ethyl acetate, 2-hydroxy-3-methyl methyl butanoate, 3-methoxy methyl propionate, 3-methoxy ethyl propionate, 3-ethoxy ethyl propionate, 3-ethoxy methyl propionate, methyl methoxy butanol, ethyl methoxy butanol, methyl ethoxy butanol, ethyl ethoxy butanol, tetrahydrofuran, dichloromethane, 1,2-dichloroethane, 1,4-dichlorobutane, trichloroethane, chlorobenzene, o-dichlorobenzene, hexane, heptane, octane, benzene, toluene, xylene, or a mixture of one or more.

The solvent amount in the liquid crystal alignment agent is not specifically limited, but the solid content in the liquid crystal alignment agent may range from 1 to 30 wt%, for example, from 3 to 20 wt%. When the solid content is within the range, it may be less affected by the impurity of substrate surface during the printing process and maintain an appropriate viscosity. Thereby, it may prevent the uniformity deteriorate of coating layer due to the high viscosity and provide an appropriate transmittance during the printing process.

The liquid crystal alignment agent may have a viscosity of 3 cps to 30 cps. When the liquid crystal alignment agent has the viscosity within the range, it may improve the coating uniformity and coating property. For example, the liquid crystal alignment agent may have a viscosity of 3 cps to 25 cps.

The liquid crystal alignment agent may further include other additives.

The other additives may include an epoxy compound. The epoxy compound is used for improving the reliability and the electro-optical characteristics, and the epoxy compound may include at least one kind of epoxy compound including 2 to 8 epoxy groups, for example, 2 to 4 epoxy groups.

The epoxy compound may be included in 0.1 parts by weight to 50 parts by weight based on 100 parts by weight of the polymer. When the epoxy compound is included within the range, it may provide an appropriate printability and flatness during coating a substrate and easily improve the reliability and the electro-optical characteristics. For example, the epoxy compound may be included in 1 part by weight to 30 parts by weight based on 100 parts by weight of the polymer.

Examples of the epoxy compound may include a compound represented by the following Chemical Formula 23, but is not limited thereto.

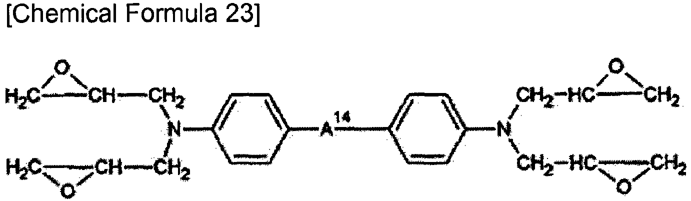

In Chemical Formula 23,
A¹⁴ is a substituted or unsubstituted C6 to C12 aromatic organic group, or a substituted or unsubstituted divalent C6 to C12 alicyclic organic group, or a substituted or unsubstituted divalent C6 to C12 aliphatic organic group, and specifically a substituted or unsubstituted C1 to C6 alkylene group.

The epoxy compound may include N,N,N',N'-tetraglycidyl-4,4'-diaminophenylmethane(TGDDM), N, N, N', N'-tetraglycidyl-4,4'-diaminophenylethane, N,N,N',N'-tetraglycidyl-4,4'-diaminophenylpropane, N,N,N',N'-tetraglycidyl-4,4'-diaminophenylbutane, N,N,N',N'-tetraglycidyl-4,4'-diaminobenzene, ethyleneglycoldiglycidylether, polyethyleneglycoldiglycidylether, propyleneglycoldiglycidylether, tripropyleneglycold iglycidylether, polypropyleneglycoldiglycidylether, neopentylglycoldiglycidylether, 1,6-hexanedioldiglycidylether, glycerinediglycidylether, 2,2-dibromoneopentylglycoldiglycidylether, 1,3,5,6-tetraglycidyl-2,4-hexanediol, N,N,N',N'-tetraglycidyl-1,4-phenylenediamine, N,N,N',N'-tetraglycidyl-m-xylenediamine, N,N,N',N'-tetraglycidyl-2,2'-dimethyl-4,4'-diaminobiphenyl, 2,2-bis[4-(N,N-diglycidyl-4-aminophenoxy)phenyl]propane, N,N,N',N'-tetraglycidyl-4,4'-diaminodiphenylmethane, 1,3-bis(N,N-diglycidylaminomethyl)cyclohexane, 1,3-bis(N,N-diglycidylaminomethyl)benzene, and the like, but is not limited thereto.

In order to improve the printability, it may further include an additive such as an appropriate surfactant or a coupling agent.

The liquid crystal alignment film according to another embodiment is provided by using the liquid crystal alignment agent.

The liquid crystal alignment film may be obtained by applying the liquid crystal alignment agent on the substrate. The method of applying the liquid crystal alignment agent on the substrate may include spin coating, flexo printing, Inkjet printing or the like. The flexo printing may be generally used since it provides an excellent coating uniformity and easily provides a wide area.

The substrate is not specifically limited as long as it has high transmittance, and it may include a glass substrate or a plastic substrate such as acryl substrate or polycarbonate substrate, and the like. In addition, it may simplify the manufacturing process when using the substrate formed with an indium-tin oxide(ITO) electrode or the like for driving the liquid crystal.

The liquid crystal alignment agent is uniformly coated on the substrate to increase the coating uniformity and pre-dried at a temperature of room temperature to 200°C, for example, 30°C to 150°C, or 40°C to 120°C for 1 minute to 100 minutes. Through the pre-drying process, it may control the volatizing degree of each component of liquid crystal alignment agent to provide a uniform coating layer having no deviation.

Then it is baked at a temperature of 80°C to 300°C, for example 120°C to 280°C for 5 minutes to 300 minutes to evaporate the solvent, so as to provide a liquid crystal alignment film.

According to further another embodiment of the present invention, a liquid crystal display is provided that includes the liquid crystal alignment film.

The following examples illustrate this disclosure in more detail. However, they are exemplary embodiments of this disclosure and are not limiting.

### (Example)

### Comparative Example 1: Preparation of polyamic acid

0.5 mol of (E)-4-(3-(2,4-diaminophenethoxy)-3-oxoprophenyl)phenyl 4-(4,4,4-trifluorobutoxy)benzorate represented by the following Chemical Formula 1 a and N-methyl-2-pyrrolidone (NMP) are introduced into a 4-necked flask including an agitator, a temperature controlling device, a nitrogen gas injection tube, and a cooler under the dark room condition with passing nitrogen to provide a mixed solution. 1.0 mol of solid 4,10-dioxa-tricyclo[6.3.1.0^{2,7}]dodecane-3,5,9,11-tetraone was added to the mixed solution and vigorously agitated. Then 0.5 mol of (E)-4-(3-(2,4-diaminophenethoxy)-3-oxoprophenyl)phenyl 4-(4,4,4-trifluorobutoxy)benzorate represented by Chemical Formula 1a was added thereto and reacted. It was reacted with maintaining the temperature in 30°C to 60°C for 24 hours to provide a liquid crystal alignment agent including polyamic acid (PAA-39). The provided liquid crystal alignment agent had a solid content of 30 wt% and a viscosity of 209 cps.

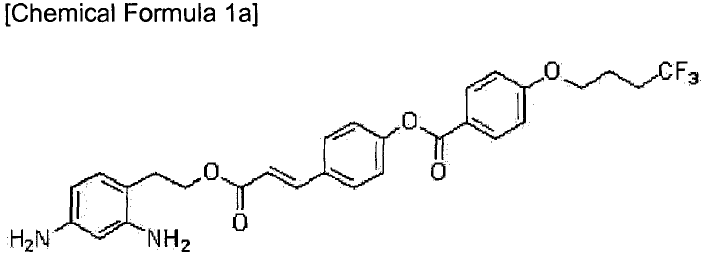

### Comparative Example 2: Preparation of polyimide

3.0 mol of acetic anhydride and 5.0 mol of pyridine were added into the obtained polyamic acid solution and cyclized at 80°C for 6 hours. Then the catalyst and the solvent were removed by the vacuum distillation to provide a polyimide resin.

The organic solvent of N-methyl-2-pyrrolidone(NMP) or γ-butyrolactone was added into the obtained the polyimide resin and agitated at a room temperature for 24 hours to provide a liquid crystal alignment agent. The obtained liquid crystal alignment agent had a solid content of 15 wt% and a viscosity of 27 cps.

### Example 1: Preparation of polyamic acid (PSA-1)

1.0 mol of 4-(1E,3E)-5-(2,4-diaminophenethoxy)-5-oxopenta-1,3-dienyl)phenyl 4-(4,4,4-trifluorobutoxy)benzorate represented by Chemical Formula 3a was introduced into a 4-necked flask including an agitator, a temperature controlling device, a nitrogen gas injection tube, and a cooler under the dark room condition with passing nitrogen, and N-methyl-2-pyrrolidone(NMP) was added into the flask to dissolve the compound represented by Chemical Formula 3a into NMP.

1.0 mol of solid 4,10-dioxa-tricyclo[6.3.1.0^{2,7}]dodecane-3,5,9,11-tetraone (also referred to "2,3,5-tricarboxylcyclopentyl acetic anhydride") was added into the solution and agitated for 1 hour and reacted to provide an appropriate viscosity (about 150 cps).

The obtained solution had a solid content of 30 wt%. It was copolymerized with maintaining a temperature of 50°C for 24 hours to provide a polyamic acid solution.

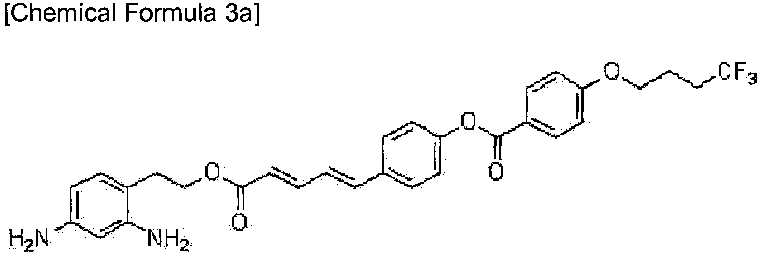

The obtained polyamic acid solution was distillated to provide a pure polyamic acid. The obtained polyamic acid had a weight average molecular weight of 200,000. An organic mixed solvent (volume ratio of 3:4:3) of N-methyl-2-pyrrolidone(NMP), γ-butyrolactone, and 2-butylcellosolve was added into the polyamic acid and agitated at a room temperature for 24 hours to provide a photo alignment polyamic acid(PSA-1) solution which is a liquid crystal alignment agent.

### Examples 2 and 3: Preparation of polyamic acid (PSA-2 to 3)

A photo alignment polyamic acid (PSA-2 to 3, liquid crystal alignment agent) solution was prepared in accordance with the same procedure as in Example 1, except that 4-(1E,3E)-5-(2,4-diaminophenethoxy)-5-oxopenta-1,3-dienyl)phenyl 4-(4,4,4-trifluorobutoxy)benzorate represented by Chemical Formula 3a and 4,4'-(1E,1'E)-3,3'-(2,2-bis(4-aminobenzyl)propan-1,3-diyl)bis(oxy)bis(3-oxoprope n-3,1-diyl)bis(4,1-phenylene)bis(4-(4,4,4-trifluorobutoxy)benzorate represented by Chemical Formula 4a were included as in the following Table 1.

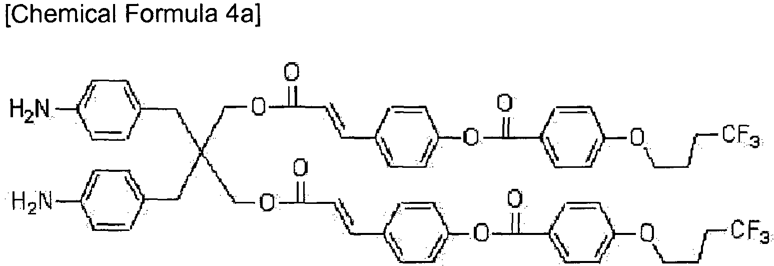

### Examples 4 to 6: Preparation of polyamic acid (PSA-4 to 6)

A photo alignment polyamic acid (PSA-4 to 6, liquid crystal alignment agent) solution was prepared in accordance with the same procedure as in Example 1, except that 4-(1E,3E)-5-(2,4-diaminophenethoxy)-5-oxopenta-1,3-dienyl)phenyl 4-(4,4,4-trifluorobutoxy)benzorate represented by Chemical Formula 3a, 4,4'-(1E,1'E)-3,3'-(2,2-bis(4-aminobenzyl)propan-1,3-diyl)bis(oxy)bis(3-oxoprope n-3,1-diyl)bis(4,1-phenylene)bis(4-(4,4,4-trifluorobutoxy)benzorate represented by Chemical Formula 4a, and 1-(3,5-diaminophenyl)-3-octadecyl pyrrolidine-2,5-dione represented by Chemical Formula 5a were included as in the following Table 1.

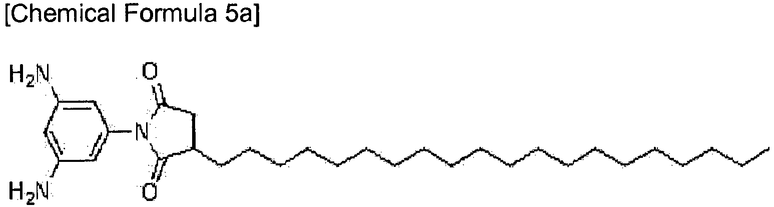

### Example 7: Preparation of polyimide polymer (PSI-1)

0.5 mol of 4-(1 E,3E)-5-(2,4-diaminopen ethoxy)-5-oxopenta-1,3-dienyl)phenyl 4-(4,4,4-trifluorobutoxy)benzorate represented by Chemical Formula 3a was introduced into a 4-necked flask including an agitator, a temperature controlling device, a nitrogen gas injection tube, and a cooler under the dark room condition with passing nitrogen, and N-methyl-2-pyrrolidone(NMP) was added into the flask to dissolve the compound represented by Chemical Formula 3a into NMP.

1.0 mol of solid 4,10-dioxa-tricyclo[6.3.1.0^{2,7}]dodecane-3,5,9,11-tetraone (also referred to "2,3,5-tricarboxylcyclopentyl acetic anhydride") was added into the solution and vigorously agitated.

After agitating for one hour, it was reacted to provide an appropriate viscosity (about 150 cps).

The obtained solution had a solid content of 30 wt%, and the obtained solution was reacted at a room temperature for 24 hours to provide a polyamic acid solution.

3.0 mol of acetic anhydride catalyst and 5.0 mol of pyridine catalyst were added into the polyamic acid solution and heated until 80°C and reacted for 6 hours. The acetic anhydride and the pyridine catalyst and NMP solvent were removed by vacuum distillating the reaction products to provide a soluble polyimide resin solution having a solid content of 20 wt%.

The obtained soluble polyimide resin was distillated to provide a pure soluble polyimide resin (weight average molecular weight of 200,000). An organic mixed solvent (volume ratio of 3:4:3) of N-methyl-2-pyrrolidone(NMP), γ-butyrolactone, and 2-butylcellosolve was added into the obtained soluble polyamide resin and agitated at a room temperature for 24 hours to provide a photo alignment polyimide resin(PSI-1) which is a liquid crystal alignment agent.

### Examples 8 to 9: Preparation of polyimide polymer (PSI-2 to PSI-3)

It was performed in accordance with the same procedure as in Example 7, except that 4-(1E,3E)-5-(2,4-diaminophenethoxy)-5-oxopenta-1,3-dienyl)phenyl 4-(4,4,4-trifluorobutoxy)benzorate represented by Chemical Formula 3a and 4,4'-(1E,1'E)-3,3'-(2,2-bis(4-aminobenzyl)propan-1,3-diyl)bis(oxy)bis(3-oxoprope n-3,1-diyl)bis(4,1-phenylene)bis(4-(4,4,4-trifluorobutoxy)benzorate represented by Chemical Formula 4a were included as in the following Table 1 to provide a polyamic acid, and then a soluble photo alignment polyimide resin solution (liquid crystal alignment agent) was obtained using the polyamic acid in accordance with the same procedure as in Example 7.

### Examples 10 to 12: Preparation of polyimide polymer (PSI-4 to PSI-6)

It was performed in accordance with the same procedure as in Example 7, except that 4-(1E,3E)-5-(2,4-diaminophenethoxy)-5-oxopenta-1,3-dienyl)phenyl 4-(4,4,4-trifluorobutoxy)benzorate represented by Chemical Formula 3a, 4,4'-(1 E,1'E)-3,3'-(2,2-bis(4-aminobenzyl)propan-1,3-diyl)bis(oxy)bis(3-oxoprope n-3,1-diyl)bis(4,1-phenylene)bis(4-(4,4,4-trifluorobutoxy)benzorate represented by Chemical Formula 4a, and 1-(3,5-diaminophenyl)-3-octadecylpyrrolidine-2,5-dione represented by Chemical Formula 5a were included as in the following Table 1 to provide a polyamic acid, and then a soluble photo alignment polyimide resin solution (liquid crystal alignment agent) was obtained using the polyamic acid in accordance with the same procedure as in Example 7.

**(Table 1)**

| | Preparation Example | Chemical Formula3a (mol%) | Chemical Formula4a (mol%) | Chemical Formula5a (mol%) | Type |
|---|---|---|---|---|---|
| Example 1 | PSA-1 | 100 | - | - | polyamic acid |
| Example 2 | PSA-2 | 90 | 10 | - | polyamic acid |
| Example 3 | PSA-3 | 80 | 20 | - | polyamic acid |
| Example 4 | PSA-4 | 70 | 10 | 20 | polyamic acid |
| Example 5 | PSA-5 | 60 | 10 | 30 | polyamic acid |
| Example 6 | PSA-6 | 50 | 10 | 40 | polyamic acid |
| Example 7 | PSI-1 | 100 | - | - | polyimide |
| Example 8 | PSI-2 | 90 | 10 | - | polyimide |
| Example 9 | PSI-3 | 80 | 20 | - | polyimide |
| Example 10 | PSI-4 | 70 | 10 | 20 | polyimide |
| Example 11 | PSI-5 | 60 | 10 | 30 | polyimide |
| Example 12 | PSI-6 | 50 | 10 | 40 | polyimide |

As shown in Table 1, the amount unit of Chemical Formula 3a, Chemical Formula 4a and Chemical Formula 5a was mol%, which is mol % of each used component based on the total mol of diamine used for preparing polyamic acid.

### Experimental Example 1: Assessment of Vertical Alignment Properties of Liquid Crystal Alignment Film (Measuring the pretilt angle difference (Δpretilt) from the standard liquid crystal cell)

A liquid crystal cell was used to evaluate vertical alignment properties of liquid crystal alignment agents. The liquid crystal cell was fabricated as follows.

Photolithography for patterning was performed to remove the rest of indium-tin oxide (ITO) except for 3 cm x 6 cm square-shaped ITO and an ITO electrode shape for voltage application on a standardized ITO glass substrate.

The liquid crystal photo-alignment agents of Examples 1 to 12 and Comparative Examples 1 to 3 were spin-coated to be 0.1 µm thick on the patterned ITO substrate and cured at a temperature of 80°C and 220°C.

In order to measure the vertical alignment properties, it manufactured a test liquid crystal cell through a rubbing process, an assembling process, and an liquid crystal injecting process.

The vertical alignment property of liquid crystal cell obtained from the processes was observed using a perpendicularly polarized optical microscope. After observing the vertical alignment properties, the liquid crystal cell having good vertical alignment properties was selected for a standard liquid crystal cell, and the pretilt angle of standard liquid crystal cell was designated as 90°. Then each liquid crystal cell was irradiated with UV energy under applying electric field and measured for the pretilt angle using a crystal rotation method. In Table 1, Δ pretilt indicates the difference between the measured pretilt angle of each liquid crystal cell and the pretilt angle of the standard liquid crystal cell.

The references for evaluating the vertical alignment properties are follows:

### <Reference for Evaluating Vertical Alignment Properties>

Good: the pretilt angle difference from the standard liquid crystal cell ranges from 0.3° to 4°.
Bad: the pretilt angle difference from the standard liquid crystal cell is less than 0.3° or more than 4°.

### Experimental Example 2: Liquid crystal alignment properties

The obtained liquid crystal cell was irradiated with UV energy under applying electrical field, and the liquid crystal alignment properties of each liquid crystal cell was measured by using a perpendicularly polarized optical microscope. The references for evaluating the liquid crystal alignment properties are follows:

### <Reference for evaluating liquid crystal alignment properties >

Good: finding no disclination
Bad: finding disclination

### Experimental Example 3: Voltage Holding Ratio and Residual DC

### Voltage

The obtained liquid crystal cell was applied with voltage of 1V, and each liquid crystal cell was measured for the voltage holding ratio (VHR) at a room temperature; and it was applied with voltage of 0V to +10V, and each liquid crystal cell was measured for the residual DC (RDC) voltage.

The voltage holding ratio indicates the degree that the charged voltage is maintained by the liquid crystal layer floated with extraneous power for random period in active matrix mode TFT-LCD, which is preferable to approach 100%.

### <Reference of Evaluating Voltage Holding Ratio>

Good: 97% or higher
Bad: less than 97%

The residual DC voltage indicates voltage applied to the liquid crystal layer by adsorbing impurities of ionized liquid crystal layer to the alignment layer, in which the lower is the better. The method of measuring the residual DC voltage generally includes a method using a flicker, a method of using electrical capacity change curved line (C-V) of liquid crystal layer depending upon DC voltage.

### <Reference of Evaluating Residual DC Voltage>

Good: less than 100 mV
Bad: 100 mV or higher

**(Table 2)**

| Preparation Example | Vertical alignment | Liquid crystal alignment properties | Voltage holding ratio | RDC |
|---|---|---|---|---|
| PSA-1 | Good | Good | Good | Good |
| PSA-2 | Good | Good | Good | Good |
| PSA-3 | Good | Good | Good | Good |
| PSA-4 | Good | Good | Good | Good |
| PSA-5 | Good | Good | Good | Good |
| PSA-6 | Good | Good | Good | Good |
| PSI-7 | Good | Good | Good | Good |
| PSI-8 | Good | Good | Good | Good |
| PSI-9 | Good | Good | Good | Good |
| PSI-10 | Good | Good | Good | Good |
| PSI-11 | Good | Good | Good | Good |
| PSI-12 | Good | Good | Good | Good |
| Comparative Example1 | Good | Good | Good | Bad |
| Comparative Example2 | Good | Good | Good | Bad |

As shown in Table 2, the liquid crystal alignment agents obtained from Examples 1 to 12 had improved RDC characteristics compared to Comparative Examples 1 and 2.

The RDC characteristics refer to the references of evaluating the electric characteristics of liquid crystal alignment film. The higher value means that the liquid crystal was more polluted due to the organic or inorganic materials to deteriorate the long-term reliability. Accordingly, the liquid crystal alignment agents obtained from Examples 1 to 12 had more excellent electric characteristics than those of Comparative Examples 1 and 2.

## Claims

1. A liquid crystal alignment agent comprising
a polymer selected from polyamic acid including a repeating unit represented by the following Chemical Formula 1, polyimide including a repeating unit represented by the following Chemical Formula 2, and a combination thereof: 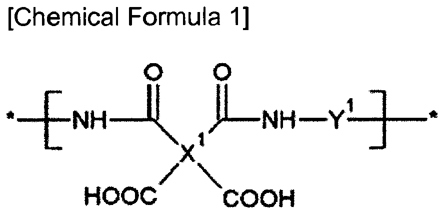 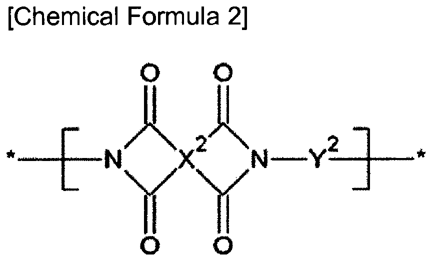 wherein, in Chemical Formulae 1 and 2,
X¹ and X² are the same or different, and are each independently a tetravalent organic group derived from alicyclic acid dianhydride or aromatic acid dianhydride, and
Y¹ and Y² are the same or different, and are each independently a divalent organic group derived from diamine, and the diamine includes one represented by the following Chemical Formula 3, 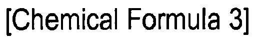 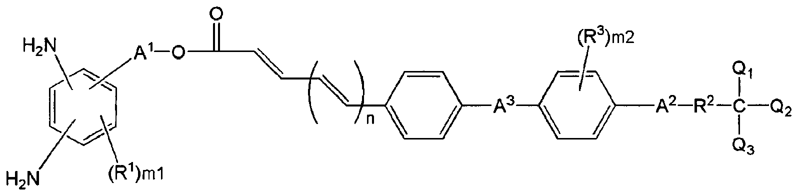 wherein, in Chemical Formula 3,
A¹ is a substituted or unsubstituted C1 to C20 alkylene group,
A² is a single bond, O, SO₂, or C(R₁₀₃)(R₁₀₄), wherein R₁₀₃ and R₁₀₄ are the same or different, and are independently hydrogen, or a substituted or unsubstituted C1 to C6 alkylene,
A³ is -O-, -OCO-, -COO-, -CONH-, or -NHCO-, each R¹ is a substituted or unsubstituted C1 to C30 alkyl group; a substituted or unsubstituted C6 to C30 aryl group; or a substituted or unsubstituted C2 to C30 heteroaryl group,
R² is a substitutedc or unsubstituted C1 to C30 alkylene group, a C1 to C30 alkylene group where at least one of -CH₂- group is independently substituted with -CO-, -CO-O-, -NZ-, -NZ-CO-, -CO-NZ- or -CH=CH-, wherein Z is hydrogen or a C1 to C10 alkyl group, provided that oxygen atom is not directly bound to each other,
each R³ is the same or different and is independently substituted or unsubstituted C1 to C30 alkyl; substituted or unsubstituted C6 to C30 aryl; a substituted or unsubstituted C2 to C30 heteroaryl,
Q₁, Q₂ and Q₃ are independently hydrogen or a halogen,
n is an integer ranging from 0 to 3
m1 is an integer ranging from 0 to 3, and
m2 is an integer ranging from 0 to 4.

2. The liquid crystal alignment agent of claim 1, the diamine further comprises at least one selected from diamine represented by the following Chemical Formula 4 and diamine represented by the following Chemical Formula 5: 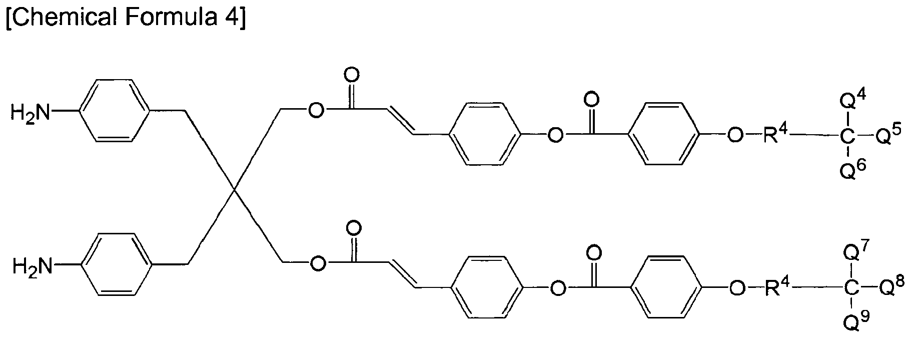 wherein, in Chemical Formula 4,
R⁴ is a substituted or unsubstituted C1 to C30 alkylene group, a C1 to C30 alkylene group where at least one of -CH₂- group is independently substituted with -CO-, -CO-O-, -NZ-, -NZ-CO-, -CO-NZ- or -CH=CH-, wherein Z is hydrogen or a C1 to C10 alkyl group, provided that oxygen atom is not directly bound to each other, and
Q⁴, Q⁵, Q⁶, Q⁷, Q⁸ and Q⁹ are independently hydrogen or a halogen, 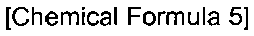 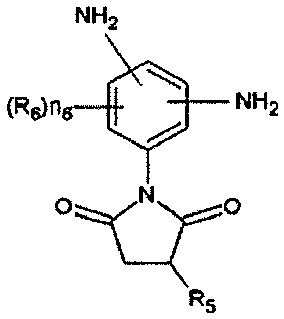 wherein, in Chemical Formula 5,
R₅ is hydrogen; a substituted or unsubstituted C1 to C30 alkyl group; a substituted or unsubstituted C6 to C30 aryl group; or a substituted or unsubstituted C2 to C30 heteroaryl group,
R₆ is a substituted or unsubstituted C1 to C30 alkyl group; a substituted or unsubstituted C6 to C30 aryl group; or a substituted or unsubstituted C2 to C30 heteroaryl group, and
n6 is an integer ranging from 0 to 3.

3. The liquid crystal alignment agent of claim 1 or 2, wherein the diamine comprises 30mol% to 90mol% of the diamine represented by the above Chemical Formula 3, 5mol% to 20mol% of the diamine represented by the above Chemical Formula 4, and 5mol% to 50mol% of the diamine represented by the above Chemical Formula 5 based on the total amount of diamine.

4. The liquid crystal alignment agent of claims 1 to 3, wherein the diamine represented by the above Chemical Formula 3 is the diamine represented by the following Chemical Formula 6: 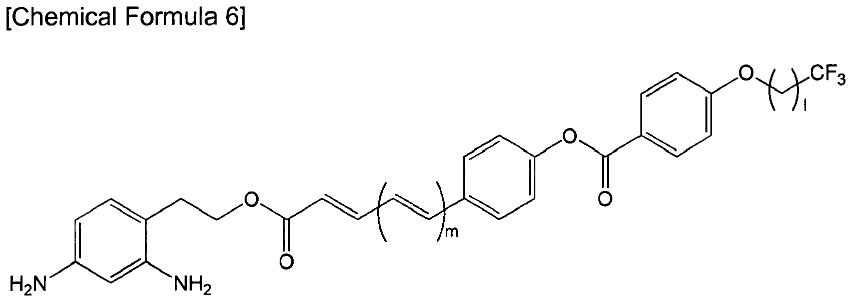 wherein, in Chemical Formula 6,
l is an integer ranging from 0 to 10, and
m is an integer ranging from 0 to 3.

5. The liquid crystal alignment agent of claims 1 to 4, wherein the polyamic acid and the polyimide have a weight average molecular weight of 10,000 to 300,000, respectively.

6. The liquid crystal alignment agent of claims 1 to 5, wherein the liquid crystal alignment agent comprises the polyamic acid and the polyimide at a weight ratio of 1:99 to 50:50.

7. The liquid crystal alignment agent of claims 1 to 6, wherein the liquid crystal alignment agent comprises 1 wt% to 30 wt% of a solid.

8. The liquid crystal alignment agent of claims 1 to 7, wherein the liquid crystal alignment agent has a viscosity of 3 cps to 30 cps.

9. A liquid crystal alignment film manufactured by applying the liquid crystal alignment agent of claims 1 to 8 to a substrate

10. A liquid crystal display including the liquid crystal alignment film of claim 9.

## Patentansprüche

1. Flüssigkristallausrichtungsmittel, umfassend:
ein Polymer, ausgewählt aus Polycarbamoylcarbonsäure, die eine Wiederholungseinheit umfasst, die durch die folgende chemische Formel 1 dargestellt wird, Polyimid, das eine Wiederholungseinheit umfasst, die durch die folgenden chemische Formel 2 dargestellt wird, und einer Kombination davon: 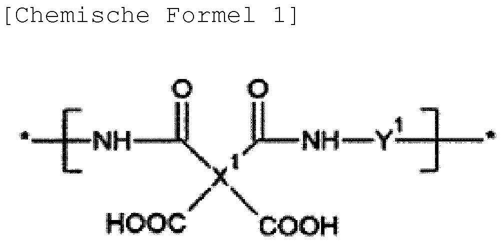 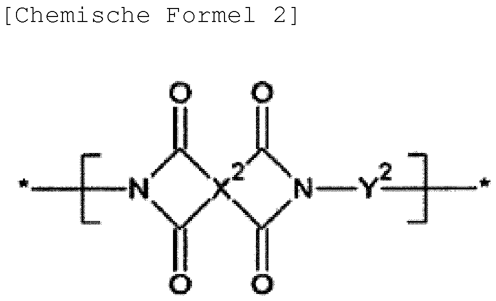 wobei in den chemischen Formeln 1 und 2
X¹ und X² gleich oder verschieden und jeweils unabhängig eine vierwertige organische Gruppe sind, die aus alicyclischem Säuredianhydrid oder aromatischem Säuredianhydrid abgeleitet ist, und
Y¹ und Y² gleich oder verschieden und jeweils unabhängig eine zweiwertige organische Gruppe sind, die aus Diamin abgeleitet ist, und wobei das Diamin eines umfasst, das durch die folgende chemische Formel 3 dargestellt wird: 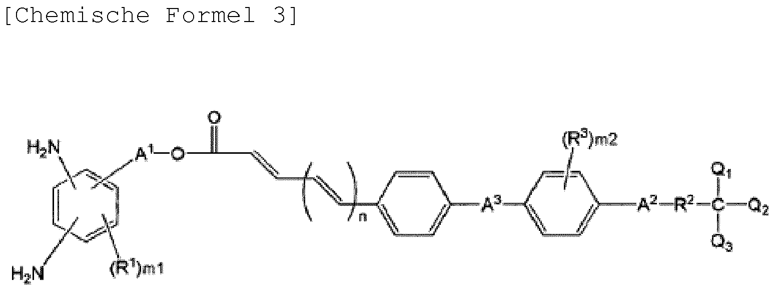
wobei in der chemischen Formel 3
A¹ eine substituierte oder unsubstituierte C1- bis C20-Alkylengruppe ist,
A² eine Einfachbindung, O, SO₂ oder C(R₁₀₃) (R₁₀₄) ist, wobei R₁₀₃ und R₁₀₄ gleich oder verschieden und unabhängig Wasserstoff oder ein substituiertes oder unsubstituiertes C1- bis C6-Alkylen sind,
A³ -O-, -OCO-, -COO-, -CONH- oder -NHCO- ist, jedes R¹ eine substituierte oder unsubstituierte C1- bis C30-Alkylgruppe; eine substituierte oder unsubstituierte C6- bis C30-Arylgruppe; oder eine substituierte oder unsubstituierte C2- bis C30-Heteroarylgruppe ist,
R² eine substituierte oder unsubstituierte C1- bis C30-Alkylengruppe ist, eine C1- bis C30-Alkylengruppe, wobei wenigstens eine von -CH₂-Gruppe unabhängig substituiert ist mit -CO-, -CO-O-, -NZ-, -NZ-CO-, -CO-NZ- oder -CH=CH-, wobei Z Wasserstoff oder eine C1- bis C10-Alkylgruppe ist, vorausgesetzt, dass Sauerstoffatom nicht direkt aneinander gebunden ist,
jedes R³ gleich oder verschieden und unabhängig substituiertes oder unsubstituiertes C1- bis C30-Alkyl; substituiertes oder unsubstituiertes C6-bis C30-Aryl; ein substituiertes oder unsubstituiertes C2- bis C30-Heteroaryl ist,
Q₁, Q₂ und Q₃ unabhängig Wasserstoff oder ein Halogen sind,
n eine ganze Zahl im Bereich von 0 bis 3 ist,
m1 eine ganze Zahl im Bereich von 0 bis 3 ist, und
m2 eine ganze Zahl im Bereich von 0 bis 4 ist.

2. Flüssigkristallausrichtungsmittel nach Anspruch 1, wobei das Diamin ferner mindestens eines umfasst, das ausgewählt ist aus Diamin, das durch die folgende chemische Formel 4 dargestellt wird, und Diamin, das durch die folgende chemische Formel 5 dargestellt wird: 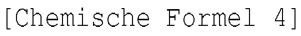 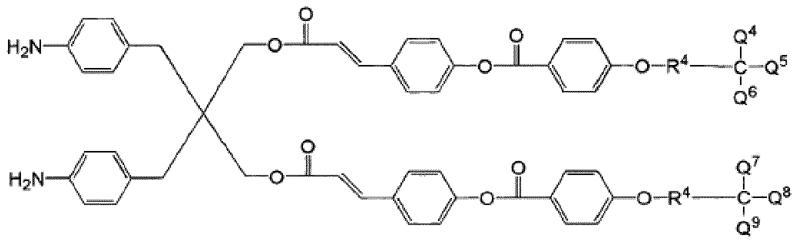 wobei in der chemischen Formel 4
R⁴ eine substituierte oder unsubstituierte C1- bis C30-Alkylengruppe ist, eine C1- bis C30-Alkylengruppe, wobei mindestens eine von -CH2-Gruppe unabhängig substituiert ist mit -CO-, -CO-O-, -NZ-, -NZ-CO-, -CO-NZ- oder -CH=CH-, wobei Z Wasserstoff oder eine C1- bis C10-Alkylgruppe ist, vorausgesetzt, dass Sauerstoffatom nicht direkt aneinander gebunden ist, und
Q⁴, Q⁵, Q⁶, Q⁷, Q⁸ und Q⁹ unabhängig Wasserstoff oder ein Halogen sind, 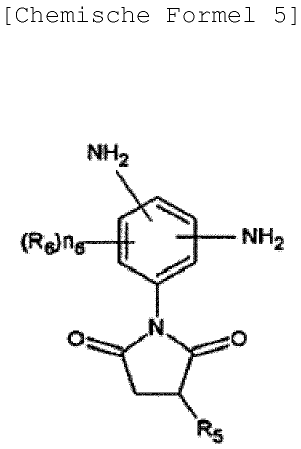
wobei in der chemischen Formel 5
R₅ Wasserstoff; eine substituierte oder unsubstituierte C1- bis C30-Alkylgruppe; eine substituierte oder unsubstituierte C6- bis C30-Arylgruppe; oder eine substituierte oder unsubstituierte C2- bis C30-Heteroarylgruppe ist,
R₆ eine substituierte oder unsubstituierte C1- bis C30-Alkylgruppe; eine substituierte oder unsubstituierte C6- bis C30-Arylgruppe; oder eine substituierte oder unsubstituierte C2- bis C30-Heteroarylgruppe ist, und
n6 eine ganze Zahl im Bereich von 0 bis 3 ist.

3. Flüssigkristallausrichtungsmittel nach Anspruch 1 oder 2, wobei das Diamin 30 Mol-% bis 90 Mol-% des Diamins, das durch die vorstehende chemische Formel 3 dargestellt ist, 5 Mol-% bis 20 Mol-% des Diamins, das durch die vorstehende chemische Formel 4 dargestellt ist, und 5 Mol-% bis 50 Mol-% des Diamins, das durch die vorstehende chemische Formel 5 dargestellt ist, bezogen auf die Gesamtmenge von Diamin umfasst.

4. Flüssigkristallausrichtungsmittel nach Anspruch 1 bis 3, wobei das Diamin, das durch die vorstehende chemische Formel 3 dargestellt ist, das Diamin ist, das durch die folgende chemische Formel 6 dargestellt wird: 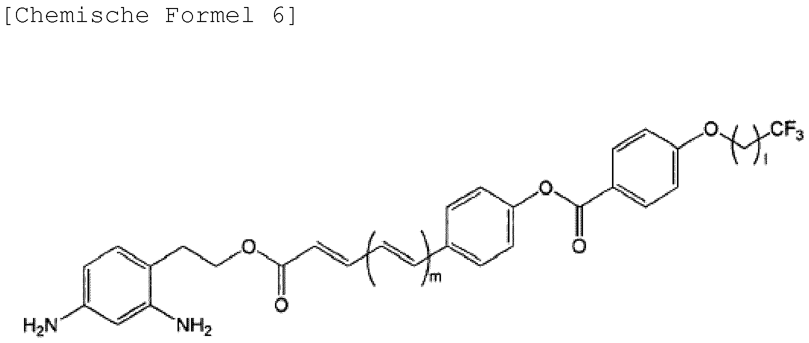 wobei in der chemischen Formel 6
l eine ganze Zahl im Bereich von 0 bis 10 ist, und
m eine ganze Zahl im Bereich von 0 bis 3 ist.

5. Flüssigkristallausrichtungsmittel nach Anspruch 1 bis 4, wobei die Polycarbamoylcarbonsäure und das Polyimid eine gewichtsmittlere relative Molekülmasse von 10.000 bzw. bis 300.000 aufweisen.

6. Flüssigkristallausrichtungsmittel nach Anspruch 1 bis 5, wobei das Flüssigkristallausrichtungsmittel die Polycarbamoylcarbonsäure und das Polyimid in einem Gewichtsverhältnis von 1:99 bis 50:50 umfasst.

7. Flüssigkristallausrichtungsmittel nach Anspruch 1 bis 6, wobei das Flüssigkristallausrichtungsmittel 1 Gew.-% bis 30 Gew.-% eines Feststoffs umfasst.

8. Flüssigkristallausrichtungsmittel nach Anspruch 1 bis 7, wobei das Flüssigkristallausrichtungsmittel eine Viskosität von 3 cps bis 30 cps aufweist.

9. Flüssigkristallausrichtungsfolie, hergestellt durch Auftragen des Flüssigkristallausrichtungsmittels nach Anspruch 1 bis 8 auf ein Substrat.

10. Flüssigkristallanzeige, umfassend die Flüssigkristallausrichtungsfolie nach Anspruch 9.

## Revendications

1. Agent d'alignement de cristaux liquides comprenant
un polymère choisi parmi un acide polyamique comportant un motif répétitif représenté par la formule chimique 1 suivante, un polyimide comportant un motif répétitif représenté par la formule chimique 2 suivante, et une combinaison de ceux-ci : 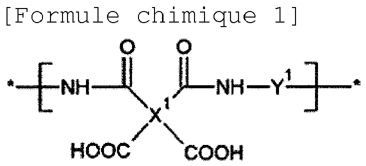 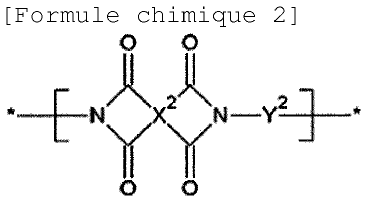 dans lequel, dans les formules chimiques 1 et 2,
X¹ et X² sont identiques ou différents, et représentent chacun indépendamment un groupe organique tétravalent dérivé d'un dianhydride d'acide alicyclique ou d'un dianhydride d'acide aromatique, et
Y¹ et Y² sont identiques ou différents, et représentent chacun indépendamment un groupe organique divalent dérivé d'une diamine, et la diamine comporte une fraction représentée par la formule chimique 3 suivante, 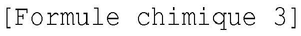 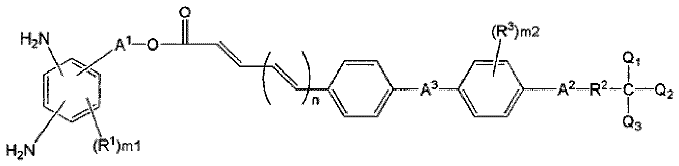
dans lequel, dans la formule chimique 3,
A¹ représente un groupe alkylène en C1 à C20 substitué ou non substitué,
A² représente une simple liaison, O, SO₂, ou C(R₁₀₃) (R₁₀₄), dans lequel R₁₀₃ et R₁₀₄ sont identiques ou différents, et représentent indépendamment un hydrogène, ou un alkylène en C1 à C6 substitué ou non substitué,
A³ représente -O-, -OCO-, -COO-, -CONH-, ou -NHCO-, chaque R¹ représente un groupe alkyle en C1 à C30 substitué ou non substitué, un groupe aryle en C6 à C30 substitué ou non substitué, ou un groupe hétéroaryle en C2 à C30 substitué ou non substitué,
R² représente un groupe alkylène en C1 à C30 substitué ou non substitué, un groupe alkylène en C1 à C30 où l'un au moins des groupes -CH₂- est indépendamment substitué par -CO-, -CO-O-, -NZ-, -NZ-CO-, -CO-NZ- ou -CH=CH-, dans lesquels Z représente un hydrogène ou un groupe alkyle en C1 à C10, à condition que les atomes d'oxygène ne soient pas directement liés l'un à l'autre,
chaque R³ est identique ou différent et représente indépendamment un alkyle en C1 à C30 substitué ou non substitué, un aryle en C6 à C30 substitué ou non substitué, ou un hétéroaryle en C2 à C30 substitué ou non substitué,
Q₁, Q₂ et Q₃ représentent indépendamment un hydrogène ou un halogène,
n est un entier allant de 0 à 3,
m1 est un entier allant de 0 à 3, et
m2 est un entier allant de 0 à 4.

2. Agent d'alignement de cristaux liquides selon la revendication 1, la diamine comprenant en outre au moins une fraction choisie parmi une diamine représentée par la formule chimique 4 suivante et une diamine représentée par la formule chimique 5 suivante : 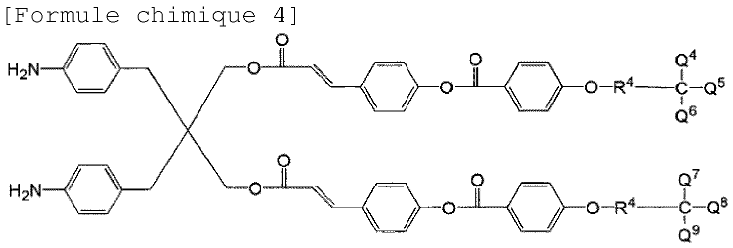 dans lequel, dans la formule chimique 4,
R⁴ représente un groupe alkylène en C1 à C30 substitué ou non substitué, un groupe alkylène en C1 à C30 où l'un au moins des groupes -CH₂- est indépendamment substitué par -CO-, -CO-O-, -NZ-, -NZ-CO-, -CO-NZ- ou -CH=CH-, dans lesquels Z représente un hydrogène ou un groupe alkyle en C1 à C10, à condition que les atomes d'oxygène ne soient pas directement liés l'un à l'autre, et
Q⁴, Q⁵, Q⁶, Q⁷, Q⁸ et Q⁹ représentent indépendamment un hydrogène ou un halogène, 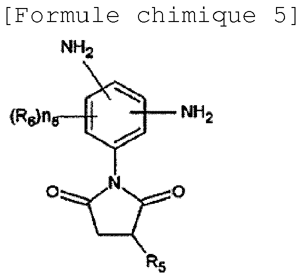
dans lequel, dans la formule chimique 5,
R₅ représente un hydrogène, un groupe alkyle en C1 à C30 substitué ou non substitué, un groupe aryle en C6 à C30 substitué ou non substitué, ou un groupe hétéroaryle en C2 à C30 substitué ou non substitué,
R₆ représente un groupe alkyle en C1 à C30 substitué ou non substitué, un groupe aryle en C6 à C30 substitué ou non substitué, ou un groupe hétéroaryle en C2 à C30 substitué ou non substitué, et
n6 est un entier allant de 0 à 3.

3. Agent d'alignement de cristaux liquides selon la revendication 1 ou 2, dans lequel la diamine comprend 30 % en moles à 90 % en moles de la diamine représentée par la formule chimique 3 ci-dessus, 5 % en moles à 20 % en moles de la diamine représentée par la formule chimique 4 ci-dessus, et 5 % en moles à 50 % en moles de la diamine représentée par la formule chimique 5 ci-dessus, rapporté à la quantité totale de diamine.

4. Agent d'alignement de cristaux liquides selon les revendications 1 à 3, dans lequel la diamine représentée par la formule chimique 3 ci-dessus est la diamine représentée par la formule chimique 6 suivante : 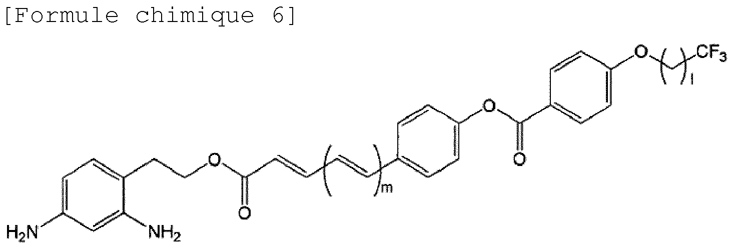 dans lequel, dans la formule chimique 6,
l est un entier allant de 0 à 10, et
m est un entier allant de 0 à 3.

5. Agent d'alignement de cristaux liquides selon les revendications 1 à 4, dans lequel l'acide polyamique et le polyimide ont un poids moléculaire moyen en poids de 10 000 à 300 000, respectivement.

6. Agent d'alignement de cristaux liquides selon les revendications 1 à 5, l'agent d'alignement de cristaux liquides comprenant l'acide polyamique et le polyimide à un rapport pondéral de 1:99 à 50:50.

7. Agent d'alignement de cristaux liquides selon les revendications 1 à 6, l'agent d'alignement de cristaux liquides comprenant 1 % en poids à 30 % en poids d'un solide.

8. Agent d'alignement de cristaux liquides selon les revendications 1 à 7, l'agent d'alignement de cristaux liquides ayant une viscosité de 3 cP à 30 cP.

9. Film d'alignement de cristaux liquides fabriqué en appliquant l'agent d'alignement de cristaux liquides des revendications 1 à 8 à un substrat.

10. Écran à cristaux liquides comportant le film d'alignement de cristaux liquides de la revendication 9.
